# EUROPÄISCHE PATENTANMELDUNG

(11) **EP 3 499 096 A1**
(43) Veröffentlichungstag der Anmeldung: **19.06.2019**
(21) Anmeldenummer: 18187040.3
(22) Anmeldetag: 02.08.2018
(51) Int. Cl.: F16J 15/16, F15B 15/14, F16J 15/3236, F16J 15/46, F16J 15/56

(54) **DRUCKSENSITIVES REIBLOSES DICHTRING-DESIGN**

(30) Priorität: 12.12.2017 DE 102017011438
(71) Anmelder: Carl Freudenberg KG, 69469 Weinheim (DE)
(72) Erfinder: Vöhringer, Marc-Christian, Dr., 79774 Albbruck (DE)

(57) **Zusammenfassung**

Die Erfindung betrifft eine Dichtungsanordnung (100) aufweisend ein Gehäuse (5), ein Maschinenelement (4) und eine Nut (13) welche in dem Gehäuse (5) oder dem Maschinenelement (4) angebracht ist, einen Dichtring (20) mit einer ersten Dichtlippe (26, 27, 28) zum Abdichten eines Dichtungsspaltes zwischen dem Gehäuse (5) und dem Maschinenelement (4), wobei der Dichtring (20) in der Nut (13) schwimmend eingebaut ist. Erfindungsgemäß weist der Dichtring (20) mindestens eine weitere Dichtlippe (21, 23) auf und die mindestens eine weitere Dichtlippe (21, 23) ist als seitliche Dichtlippe in einer Seitenfläche des Dichtrings (20) angeordnet und liegt an seitlichen Nutflächen (1, 3) an. Eine solche Dichtungsanordnung bietet die Vorteile eines Schutzes vor Verunreinigungen wenn keine Druckbeaufschlagung erfolgt mit geringen Reibungseinflüssen bei Druckbeaufschlagung.

Die Erfindung betrifft auch die Verwendung einer solchen Dichtungsanordnung (100) in einem Aktuator, wobei bei Druckbeaufschlagung des Aktuators der Dichtring (20) tiefer in die Nut (13) eintaucht.

## Beschreibung

Die Erfindung betrifft eine Dichtungsanordnung gemäß dem Oberbegriff von Anspruch 1 sowie die Verwendung einer solchen Dichtungsanordnung in einem Aktuator gemäß Anspruch 13.

### Stand der Technik

Aus dem Stand der Technik ist es bekannt O-Ringe als Kolbenabdichtung schwimmend einzubauen, z.B. in Luftpumpen. Der O-Ring wird bei einem schwimmenden Einbau nicht verpresst, sondern nur geringfügig gestaucht, wobei sein Innendurchmesser nicht am Nutgrund anliegt. Der Vorteil des schwimmenden Einbaus von O-Ringen liegt in der Leichtgängigkeit und im geringen Verschleiß des O-Rings bei dynamischen Belastungen.

Als Beispiel eines Aktuators wird die AT 009827 U1 genannt, in welcher eine Betätigungseinrichtung mit einer Zylinder-Kolben-Einrichtung dargestellt ist, die durch ein Druckgas einen Kolben kurzzeitig mit sehr hoher Geschwindigkeit bewegt. Eine solche Betätigungseinrichtung, welche als pyrotechnischer Aktuator ausgeführt sein kann, wird beispielsweise zur Betätigung von Sicherheitseinrichtungen in Kraftfahrzeugen genutzt. Ein Beispiel für eine solche Nutzung ist in der AT 511710 B1 dargestellt, aus welcher eine Vorrichtung zum Anstellen einer Motorhaube hervorgeht, welche dem Fußgängerschutz dient.

Nachteilig bei bekannten Kolben-und Stangenabdichtungen mittels schwimmenden Einbau von O-Ringen ist, dass bei ruhendem Kolben Feuchtigkeit oder Verunreinigungen die Dichtstelle passieren können. Dieses ist begründet durch die fehlende Verpressung des O-Rings in der Nut. Prinzipiell neigen O-Ringe bei bewegten Kolben oder Stangen auf Grund von Reibung mit dem O-Ring dazu, dass sie lokal oder über den ganzem Umfang verdrillen. Daraus kann eine zu hohe Leckage bei einer Kolben- oder Stangenbewegung resultieren.

### Aufgabenstellung

Aufgabe der vorliegenden Erfindung ist es, eine Dichtungsanordnung zu schaffen, welche in unbewegtem Zustand Feuchtigkeit und Verunreinigungen sicher abhält und gleichzeitig bei Druckbeaufschlagung und somit bewegter Dichtungsanordnung eine nur minimale Reibung aufweist. Weitere Aufgabe der Erfindung ist es, eine Dichtungsanordnung zu schaffen, welche leicht zu montieren und einfach im Aufbau ist.

### Technische Lösung

Gelöst wird diese Aufgabe durch eine Dichtungsanordnung mit den Merkmalen von Anspruch 1.

Die erfindungsgemäße Dichtungsanordnung weist ein Gehäuse auf, welches als Außenteil ausgebildet ist, sowie ein relativ dazu bewegliches Maschinenelement, insbesondere einen Kolben oder eine Stange, welches als Innenteil ausgebildet ist. In dem Gehäuse oder dem Maschienenelement ist eine Nut angebracht zur Aufnahme eines Dichtrings. Der Dichtring besitzt eine erste Dichtlippe zum Abdichten eines Dichtungsspaltes zwischen dem Gehäuse und dem Maschinenelement und ist schwimmend eingebaut, d.h. der Dichtring liegt nicht auf dem Nutgrund auf, oder in anderen Worten: Die Schnurdicke des Dichtungsringes ist kleiner als der Dichtflächenabstand, d.h. der Abstand zwischen dem Nutgrund und der Stange bzw. zwischen dem Nutgrund und dem Gehäuse.

Erfindungsgemäß weist der Dichtring mindestens eine weitere Dichtlippe auf, wobei der Dichtring insbesondere zwei weitere Dichtlippen oder auch vier Dichtlippen aufweisen kann. Die mindestens eine weitere Dichtlippe ist als seitliche Dichtlippe in einer Seitenfläche des Dichtrings angeordnet und liegt an den zugehörigen seitlichen Nutflächen, d.h. den seitlichen Flächen der Nut, an. Die seitlichen Nutflächen können auch als Nutstirnflächen bezeichnet werden. Die Dichtungsanordnung ist erfindungsgemäß derart ausgelegt, dass die Kontaktspannung im Bereich der ersten Dichtlippe immer geringer ist, als die Kontaktspannung im Bereich der mindestens einen weiteren Dichtlippe und zwar unabhängig davon, ob die Dichtungsanordnung druckbeaufschlagt ist. Durch die Beibehaltung des schwimmenden Einbaus des Dichtrings wird in vorteilhafter Weise gewährleistet, dass bei Druckbeaufschlagung und Überschreitung eines bestimmten Druckes der Dichtungsanordnung der Dichtring in die Nut hineinbewegt wird und die Relativbewegung zwischen Gehäuse und Maschinenelement ohne Reibeinflüsse der Dichtungsanordnung erfolgen kann. Durch das Vorsehen der mindestens einen weiteren Dichtlippe wird der Dichtring bei der Montage in der Nut axial verpresst und an der Kontaktfläche der mindestens einen weiteren Dichtlippe mit der seitlichen Nutfläche entsteht eine Barriere, welche Feuchtigkeit und Verunreinigungen bei ruhender Dichtungsanordnung nicht passieren lässt.

In vorteilhafter Weiterbildung der erfindungsgemäßen Dichtungsanordnung sind am Dichtring Einführschrägen vorgesehen. Gemäß einer ersten Variante können die Einführschrägen nur am Übergang von den Seitenflächen zur nutgrundseitigen Fläche angeordnet sein. Gemäß einer zweiten Variante erstrecken sich die Einführschrägen über einen Großteil der Seitenflächen. In der dritten Variante erstrecken sich die Einführschrägen über die gesamten Seitenflächen des Dichtrings, so dass sich eine keilförmige bzw. trapezförmige Ausgestaltung des Dichtrings ergibt. Durch alle drei Varianten wird eine vereinfachte Montage des Dichtringes gewährleistet.

In einer weiteren als vorteilhaft erachteten Ausführungsvariante der Dichtungsanordnung ist die Nut konisch ausgeführt und der Dichtring besitzt einen konischen Querschnitt. In einer alternativen Ausführungsvariante besitzt die Nut eine sich zum Nutgrund hin verjüngende Nutbreite und der Dichtring weist einen rechteckigen Querschnitt auf. Beide Ausführungsvarianten haben den Vorteil, dass sich der Dichtring erst bei Druckbeaufschlagung mit einem höheren Druck in die Nut hineinbewegt.

In vorteilhafter Weise wird dies auch erreicht durch eine Dichtungsanordnung in einer weiteren Variante, gemäß der der Dichtring an seiner dem Nutgrund zugerichteten Seite mindestens eine Erhebung als Abstandshalter besitzt. Insbesondere können zwei Abstandshalter vorgesehen sein, um eine symmetrische Kraftverteilung zu erreichen.

In einer besonders vorteilhaften und daher bevorzugten Weiterbildung der erfindungsgemäßen Dichtungsanordnung ist die mindestens eine weitere Dichtlippe am spaltseitigen Ende der Seitenflächen des Dichtrings angeordnet. Bei mehreren weiteren Dichtlippen pro Seitenfläche ist zumindest am jeweiligen spaltseitigen Ende der Seitenfläche je eine Dichtlippe angeordnet.

Es wurde erkannt, dass der Dichtring auch x-förmig ausgebildet sein kann, d.h. einen x-förmigen Querschnitt aufweisen kann. Dadurch kann eine verbesserte Montage und ein reproduzierbareres Verformungsverhalten erreicht werden.

In vorteilhafter Weiterbildung der erfindungsgemäßen Dichtungsanordnung sind jeweils die seitlichen Nutflächen mit einem Hinterschnitt und die Seitenflächen des Dichtrings mit einer komplementären Erhebung ausgestattet, zur Bildung je einer Haltenase. Durch das Vorsehen solcher Haltenasen wird in vorteilhafter Weise erreicht, dass sich der Dichtring nach erfolgter Druckbeaufschlagung und Bewegung in die Nut hinein, nicht mehr in den Dichtungspalt zurückbewegen kann. Hintergrund ist, dass bei Einsatz der Dichtungsanordnung in einem Aktuator der Druck langsam aus dem Aktuator entweichen kann. Wird der Aktuator z.B. als pyrotechnischer Aktuator zum Anhaben einer Kfz-Motorhaube als Fußgängerschutz eingesetzt, so wird erreicht, dass die Motorhaube nach einer definierten Zeit wieder abgesenkt wird.

In vorteilhafter Weiterbildung der erfindungsgemäßen Dichtungsanordnung ist der Bereich des Nutgrunds der Nut mit mindestens einem dünnen Durchlass, z.B. einer Bohrung, mit einem Druckraum verbunden, zur Erzeugung eines zeitverzögerten Drucks im Bereich des Nutgrundes bei Druckbeaufschlagung. In anderen Worten: Es erfolgt eine Einbringung einer oder mehrerer kleiner Bohrungen im Nutgrund, d.h. in die Nut zu dem Druckraum hin. Dadurch wird - im Falle einer Ausführung als Kolbendichtung - ein zeitverzögertes Anpressen des Dichtrings an den Kolben erreicht, damit die Leckage bei dem Ausfahren des Kolbens gering ist und dass nach Ausfahren des Kolbens der Dichtring wieder an den Kolben gedrückt wird. Es wird - im Falle einer Ausführung als Stangendichtung - ein zeitverzögertes Anpressen des Dichtrings an die Stange erreicht, damit die Leckage bei dem Ausfahren der Stange gering ist und dass nach Ausfahren der Stange der Dichtring wieder an die Stange gedrückt wird. Den Druck zu halten bei ausgefahrenem Aktuator ist wichtig, damit ein vom Aktuator zu bewegendes Bauteil, z.B. eine Motorhaube, nicht sofort nach dem Ausfahren des Aktuators wieder absinkt .

In einer ersten Ausführungsform der Dichtungsanordnung ist die Nut im Gehäuse angeordnet und die Dichtungsanordnung als Stangendichtung ausgebildet. In einer zweiten Ausführungsform der Dichtungsanordnung ist die Nut hingegen im Maschinenelement angeordnet und die Dichtungsanordnung als Kolbendichtung ausgeführt.

Die Erfindung betrifft auch die Verwendung einer Dichtungsanordnung wie obenstehend beschrieben in einem Aktuator, insbesondere in einem sehr schnell wirkenden Aktuator wie zum Beispiel einem pyrotechnischen Aktuator, wobei bei Druckbeaufschlagung des Aktuators der Dichtring tiefer in die Nut eintaucht. Der Anpressdruck des Dichtrings ist dabei kleiner als der Druck im abzudichtenden Raum bei Anliegen eines gegenüber dem Umgebungsdruck erhöhten Arbeitsdruckes.

Die beschriebene Erfindung und die beschriebenen vorteilhaften Weiterbildungen der Erfindung stellen auch in Kombination miteinandersoweit es technisch sinnvoll ist - vorteilhafte Weiterbildungen der Erfindung dar.

Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Figuren verwiesen.

### Ausführungsbeispiel

Die Erfindung soll anhand beigefügter Figuren noch näher erläutert werden. Einander entsprechende Elemente und Bauteile sind in den Figuren mit gleichen Bezugszeichen versehen. Zugunsten einer besseren Übersichtlichkeit der Figuren wurde auf eine maßstabsgetreue Darstellung verzichtet.

Es zeigen in schematischer Darstellung
- Figur 1: eine Dichtungsanordnung ohne Druckbeaufschlagung in einer Ausführungsform als Stangendichtung
- Figur 2: die Kontaktspannungsverteilung der drei Dichtlippen bei einer Dichtungsanordnung nach Figur 1 der Dichtungsanordnung ohne Druckbeaufschlagung
- Figur 3: die Dichtungsanordnung aus Figur 1 bei Druckbeaufschlagung
- Figur 4: die Kontaktspannungsverteilung der Dichtungsanordnung gemäß Figur 3 bei Druckbeaufschlagung
- Figur 5: eine Dichtungsanordnung ohne Druckbeaufschlagung in einer Ausführungsform als Kolbendichtung
- Figur 6: eine Dichtungsanordnung als Stangendichtung ohne Druckbeaufschlagung mit einem kleinen Dichtlippenradius
- Figur 7: eine Dichtungsanordnung als Stangendichtung ohne Druckbeaufschlagung mit großem Dichtlippenradius
- Figur 8: eine Dichtungsanordnung als Stangendichtung ohne Druckbeaufschlagung mit konischer Nut und konischem Querschnitt des Dichtrings
- Figur 9: eine Dichtungsanordnung als Stangendichtung ohne Druckbeaufschlagung mit einem Dichtring mit rechteckigem Querschnitt und sich verjüngender Nutbreite
- Figur 10: eine Dichtungsanordnung als Stangendichtung ohne Druckbeaufschlagung mit Abstandshaltern
- Figur 11: eine Dichtungsanordnung als Stangendichtung ohne Druckbeaufschlagung mit seitlichen Einführschrägen
- Figur 12: eine Dichtungsanordnung als Stangendichtung ohne Druckbeaufschlagung mit langen seitlichen Dichtlippen
- Figur 13: eine Dichtungsanordnung als Stangendichtung ohne Druckbeaufschlagung mit seitlichen Einführschrägen
- Figur 14: eine Dichtungsanordnung als Stangendichtung ohne Druckbeaufschlagung mit einem x-förmigen Dichtring
- Figur 15: eine Dichtungsanordnung als Stangendichtung ohne Druckbeaufschlagung mit zwei ersten Dichtlippen
- Figur 16: eine Dichtungsanordnung als Stangendichtung ohne Druckbeaufschlagung mit vier weiteren Dichtlippen
- Figur 17: eine Dichtungsanordnung als Stangendichtung ohne Druckbeaufschlagung mit Haltenasen
- Figur 18: eine Dichtungsanordnung als Stangendichtung bei Druckbeaufschlagung mit Haltenasen
- Figur 19: eine Dichtungsanordnung als Stangendichtung ohne Druckbeaufschlagung mit nur einer weiteren Dichtlippe
- Figur 20: eine Dichtungsanordnung als Stangendichtung mit Druckbeaufschlagung mit Durchlass zum Nutgrund

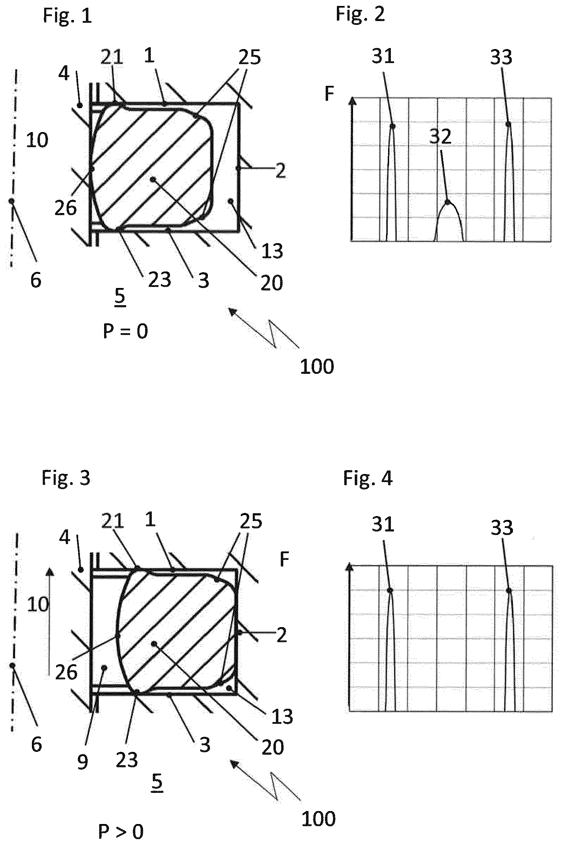

In den Figuren 1 und 2 ist eine Dichtungsanordnung 100 dargestellt, mit einem Gehäuse 5 und einem relativ dazu beweglichen Maschinenelement, ausgeführt als Kolben 4. Mit der strichpunktierten Linie 6 ist die Mittellinie und Symmetrieachse der Dichtungsanordnung 100 angedeutet. Im Gehäuse 5 ist eine Nut 13 eingebracht. Die Nut 13 besitzt eine druckabgewandte Nutstirnfläche als Nutseite 1, einen Nutgrund 2 und eine druckzugewandte Nutstirnfläche als Nutseite 3. In die Nut 13 ist ein Dichtring 20 eingesetzt. Der Dichtring 20 ist schwimmend in die Nut 13 eingebaut, d. h. der Nutring 20 weist keinen Kontakt zum Nutgrund 2 auf. Dies ist der Zustand der Dichtungsanordnung 100 wenn nur der Umgebungsdruck anliegt und somit P = 0 ist. Der Dichtring 20 ist derart ausgeführt, dass dieser im Dichtungsbereich zwischen Maschinenelement und Gehäuse, hier also zwischen Kolben 4 und Gehäuse 5 eine Dichtlippe 26 aufweist, welche an dem Kolben 4 anliegt. Darüber hinaus besitzt der Dichtring 20 eine erste weitere seitliche Dichtlippe 21 nämlich auf der druckabgewandten Seite des Dichtrings 20 nahe der Kontaktfläche der Dichtlippe 26 und eine zweite weitere seitliche Dichtlippe 23, welche auf der druckzugewandten Seite des Dichtrings 20 ebenfalls nahe der Kontaktfläche der Dichtlippe 26 angeordnet ist. Diese beiden weiteren seitlichen Dichtlippen 21, 23 liegen an den seitlichen Nutflächen 1 bzw. 3 an und stellen eine Barriere für Feuchtigkeit und Verschmutzungen dar, so dass diese die Dichtungsanordnung 100 nicht passieren können.

Wird die Dichtungsanordnung 100 mit einem über dem Atmosphärendruck liegenden Druck 9 beaufschlagt und ein bestimmter Druck überschritten, so wird der Dichtring 20 in die Nut 13 hineingedrückt. Wie in Figur 3 zu sehen, wird der Dichtring 20 dabei soweit in die Nut 13 hineingeschoben, dass der Dichtring 20 auf dem Nutgrund 2 aufliegt. Dann ist eine Bewegung 10 des Kolbens 4 ohne Reibungsbeeinflussung durch den Dichtring 20 möglich.

Der Dichtring 20 bewegt sich in die Nut 13 bzw. löst sich vom Kolben bzw. Stange 4, wenn ein bestimmter Druck P_x erreicht ist. Der bestimmte Druck P_x kann z.B. 7 bar sein. Dann löst sich der Dichtring 20 erst bei P > P_x von dem Kolben bzw. Stange 4 und nicht bei einem kleineren Druck P.

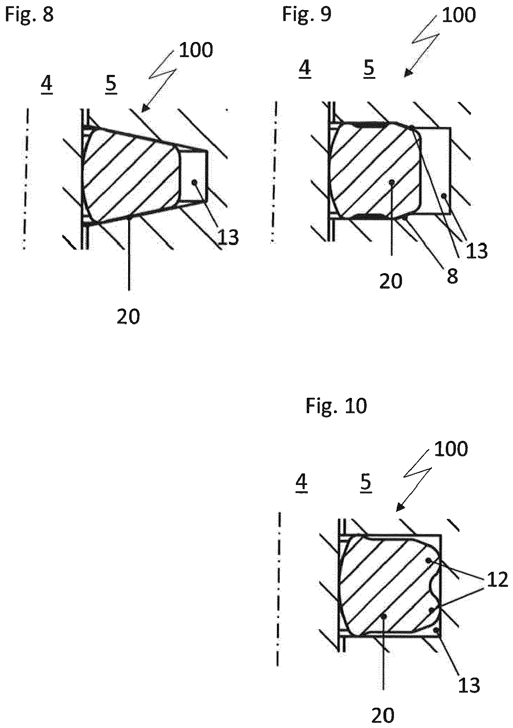

Der notwendige Druck P_x zur Bewegung des Dichtrings 20 hängt dabei von folgenden Parametern ab:
- dem Reibkoeffizient und der Flächengröße zwischen dem Dichtring 20 und den beiden seitlichen Nutstirnflächen
- de raxiale Verpressungshöhe
- der Härte der Dichtung
- der Nutform bzw. dem Winkel der beiden Stirnflächen (Nutverjüngung). Bei einer konischen Nutform ist der notwendige Druck P prinzipiell aufgrund der Inkompressiblität des Werkstoffs größer
- dem Vorhandensein von Abstandsnoppen 12 wie sie in Fig.10 dargestellt sind und der Ausführung der Abstandsnoppen 12
- der Ausführungsvariante der Dichtungsanordnung 100, d.h. als Stangen- oder Kolbendichtung. So wird bei einer Stangendichtung der Dichtring 20 aufgedehnt wobei ein geringer Druck notwendig ist. Bei einer Kolbendichtung wird der Dichring 20 gestaucht, wobei ein höherer Druck notwendig ist.

Zur einfacheren Montage kann der Dichtring 20, wie aus den Figuren 1 und 2 zu ersehen, mit Einführschrägen 25 versehen sein.

Der Dichtring 20 ist in der dargestellten Ausführungsform so dimensioniert, dass eine axiale Verpressung des Dichtrings 20 in der Nut 13 erfolgt. In Figur 2 ist die Kontaktspannung der Dichtlippen für die Dichtungsanordnung gemäß Figur 1 dargestellt, d. h. ohne Druckbeaufschlagung mit P = 0. Die Kontaktspannung 31 der druckabgewandten seitlichen Dichtlippe 21 sowie die Kontaktspannung 33 der druckzugewandten seitlichen Dichtlippe 23 sind höher als die Kontaktspannung 32 der ersten Dichtlippe zum Kolben bzw. zur Stange 4.

Wird ein Druck P > 0 an die Dichtungsanordnung 100 angelegt, so bewegt sich der Dichtring 20, wie in Figur 3 dargestellt, in die Nut 13 hinein. Wie aus Figur 4 ersichtlich besteht keine Kontaktspannung 32 mehr der ersten Dichtlippe zum Kolben bzw. zur Stange hin. Die Kontaktspannungen 31, 32 der seitlichen Dichtlippen 21, 23 bleiben jedoch erhalten.

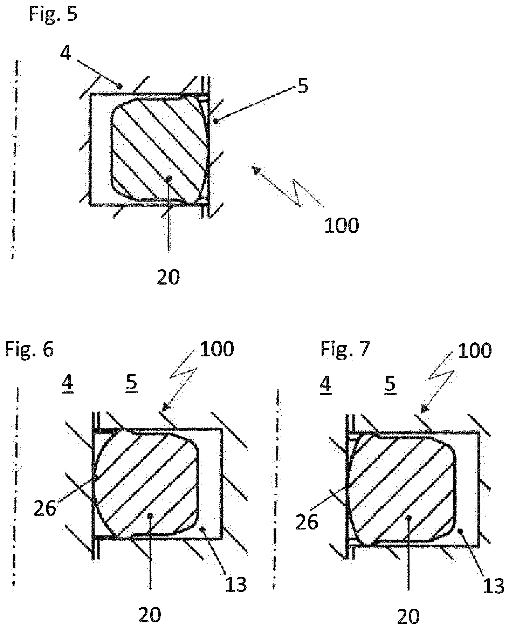

Während in den Figuren 1 und 3 sowie den weiteren Dichtungsanordnungen 100 zeigende Figuren jeweils eine Stangendichtung dargestellt ist, geht aus Figur 5 eine Kolbendichtung hervor. Die Dichtungsanordnung 100 besitzt ein Gehäuse 5, einen relativ dazu beweglichen Kolben 4 und einen Dichtring 20. Der Kolben 4 ist mit einer Nut 13 versehen, in welcher sich der Dichtring 20 befindet.

Aus den Figuren 6 und 7 gehen Dichtungsanordnungen 100 hervor, welche einen Dichtring 20 mit unterschiedlichem Radius R der ersten Dichtlippe 26 aufweisen. Der Dichtlippenradius R der ersten Dichtlippe 26 ist gemäß Figur 6 deutlich kleiner als der Dichtlippenradius R gemäß Figur 7.

In den nachfolgend beschriebenen Figuren 8 bis 10 werden Dichtungsanordnungen 100 gezeigt, bei welcher sich der Dichtring 20 erst bei einem höher anliegenden Druck P in die Nut 13 hineinbewegt.
Gemäß Figur 8 hat der Dichtring 20 einen konischen Querschnitt und die Nut 13 ist ebenfalls konisch ausgeführt.
Gemäß Figur 9 besitzt der Dichtring 20 einen im wesentlichen rechteckigen Querschnitt, während sich die Nutbreite der Nut 13 über eine nicht durchgehende Schräge 8 verjüngt.
In der Variante gemäß Figur 10 ist der Dichtring 20 mit zwei auf der Seite des Nutgrunds angebrachten Abstandshaltern als Abstandsnoppen 12 ausgeführt. Die Abstandsnoppen 12 bewirken, dass der Dichtring 20 ohne Druckbeaufschlagung nicht flächig auf dem Nutgrund 2 aufliegt. Bei Anliegen eines Drucks P > 0 ist eine nutgrundseitige Verformung des Dichtrings 20 möglich, so dass der Dichtring 20 tiefer in die Nut 13 eintauchen kann. Durch entsprechende Ausgestaltung der Abstandsnoppen 12 kann der Druck P eingestellt werden, ab welchem der Dichtring 20 in die Nut 13 eintaucht.

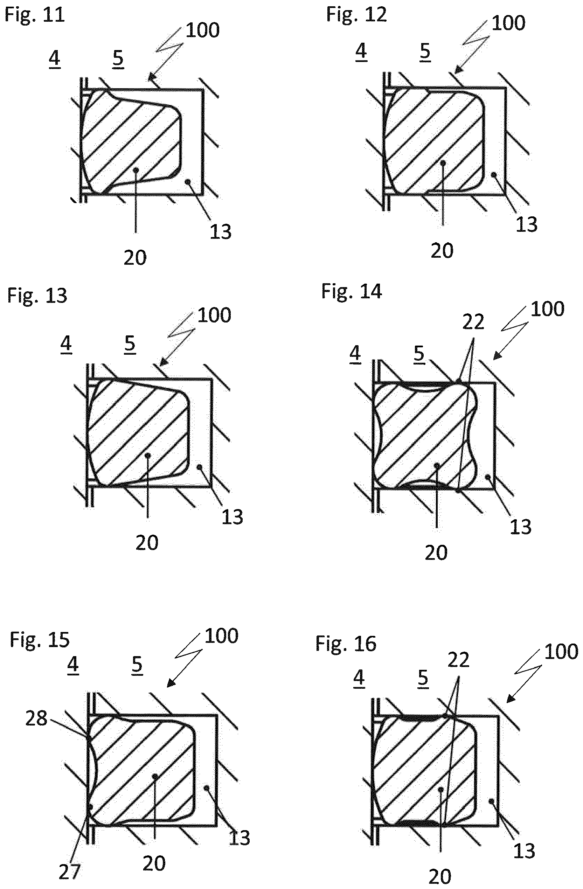

In den nachfolgend beschriebenen und in den Figuren 11 bis 13 dargestellten Ausführungsvarianten der Dichtungsanordnung 100 sind mögliche Designs des Dichtrings 20 ausgeführt, welche eine bessere und einfachere Montage sowie ein reproduzierbareres Verformungsverhalten des Dichtrings 20 ermöglichen. In der Variante gemäß Figur 11 besitzt der Dichtring 20 eine Einführschräge 25 welche sich über einen Großteil der Seitenfläche des Dichtrings 20 erstreckt.
In der Variante gemäß Figur 13 erstreckt sich die Einführschräge 25 jeweils über die gesamte Seitenfläche des Dichtrings 20.
In der in Figur 12 dargestellten Variante besitzt der Dichtring 20 besonderes breite weitere seitliche Dichtlippen 21, 23. Dadurch wird die Verkippungsgefahr des Dichtrings 20 verringert.
In der Variante gemäß Figur 14 kommt ein Dichtring 20 mit x-förmigen Querschnitt zum Einsatz. Dieser Dichtring 20 besitzt neben den seitlichen Dichtlippen 21, 23 zusätzlich noch zwei nutgrundseitige seitliche Abstützlippen 22.
In der Variante gemäß Figur 15 ist die Dichtlippe 26 des Dichtrings 20 zweigeteilt ausgeführt durch eine erste druckzugewandte Dichtlippe 27 zum Kolben bzw. zur Stange hin und durch eine zweite druckabgewandte Dichtlippe 28 zum Kolben bzw. zur Stange hin.
In der in Figur 16 dargestellten Variante des Dichtrings 20 besitzt dieser einen im wesentlichen rechteckigen Querschnitt und neben den seitlichen Dichtlippen 21, 23 noch seitliche Abstützlippen 22. Auch bei dieser Ausführungsvariante kann eine Kippbewegung des Dichtrings 20 unterbunden werden.

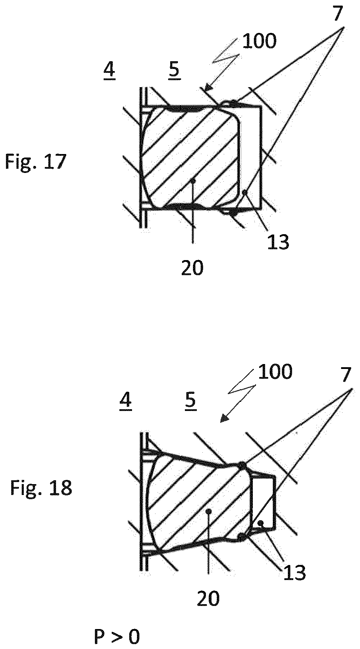

In den in den Figuren 17 und 18 dargestellten Varianten der Dichtungsanordnung 100 ist eine Ausführung gewählt, bei welcher der Dichtring 20 nach Druckbeaufschlagung in der Nut 13 verbleibt und sich nicht mehr in den Dichtspalt zurückbewegt. Während Figur 17 eine rechteckförmige Ausgestaltung von Dichtring 20 und Nut 13 zeigt, geht aus Figur 18 eine konische Ausführung von Dichtring 20 und Nut 13 hervor. In beiden Fällen sind seitliche Nuthinterschnitte 7 vorgesehen, welche als Haltenase fungieren. In Figur 17 ist die Situation dargestellt, während die Dichtungsanordnung 100 noch nicht mit einem Druck beaufschlagt wurde. Aus Figur 18 geht hervor, dass nach erfolgter Druckbeaufschlagung P > 0 der Dichtring 20 in die Nut 13 eintaucht, dort von den Haltenasen in den Nuthinterschnitten 7 gehalten wird und sich nicht mehr zurückbewegen kann.

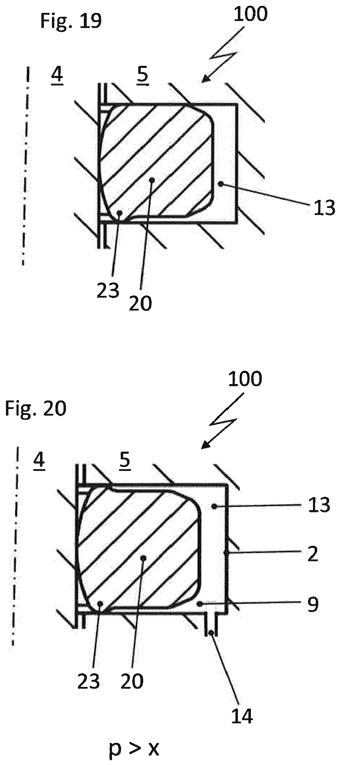

In Figur 19 ist eine alternative Ausführungsform der Dichtungsanordnung 100 dargestellt. Im Gegensatz zu den zuvor beschriebenen und in den übrigen Figuren darstellten Dichtungsanordnungen 100, besitzt der Dichtring 20 gemäß Figur 19 nur eine seitliche Dichtlippe 23 an der druckzugewandten Seite des Dichtrings 20, welche ebenfalls nahe der Kontaktfläche der ersten Dichtlippe 26 angeordnet ist.

In Figur 20 ist eine weitere Ausführungsform der Dichtungsanordnung 100 dargestellt, bei welcher der Dichtring 20 nach Druckbeaufschlagung in der Nut 13 verschoben wird und sich wieder in den Dichtspalt zurückbewegt. Dazu ist ein dünner Durchlass 14 vorgesehen, weicher den Nutgrund 2 der Nut 13 mit einem Druckraum verbindet, wo ein Druck p > 0 anliegt. Dies dient zur Erzeugung eines zeitverzögerten Drucks 9 im Bereich des Nutgrundes 2 bei Druckbeaufschlagung.

### Bezugszeichenliste

1 Nutseite (druckabgewandte Nut-Stirnfläche)
2 Nutgrund
3 Nutseite (druckzugewandte Nut-Stirnfläche)
4 Kolben bzw. Stange
5 Gehäuse
6 Mittellinie und Symmetrieachse
7 Seitlicher Nut-Hinterschnitt
8 Nut-Schräge
9 Druck
10 Kolben/Stangenbewegungsrichtung
11 Kunststoffschalen (auf einer Seite konkav)
12 Abstandsnoppe
13 Nut
14 Durchlass
20 Dichtring
21 druckabgewandte seitliche Dichtlippe nahe Kontaktfläche
22 seitliche Abstützlippe
23 druckzugewandte seitliche Dichtlippe nahe Kontaktfläche
25 Einführschräge am Ring
26 Dichtlippe zum Kolben/Stange
27 zum Kolben/Stange druckzugewandte Dichtlippe
28 zum Kolben/Stange druckabgewandte Dichtlippe
31 Kontaktspannung der druckabgewandten seitlichen Dichtlippe
32 Kontaktspannung der ersten Dichtlippe zum Kolben/Stange
33 Kontaktspannung der druckzugewandten seitlichen Dichtlippe
100 Dichtungsanordnung
P Druck
F Kontaktspannung
R Dichtlippenradius

## Patentansprüche

1. Dichtungsanordnung (100) aufweisend ein Gehäuse (5), ein Maschinenelement (4) und eine Nut (13) welche in dem Gehäuse (5) oder dem Maschinenelement (4) angebracht ist, einen Dichtring (20) mit einer ersten Dichtlippe (26, 27, 28) zum Abdichten eines Dichtungsspaltes zwischen dem Gehäuse (5) und dem Maschinenelement (4), wobei der Dichtring (20) in der Nut (13) schwimmend eingebaut ist, **dadurch gekennzeichnet,**
**dass** der Dichtring (20) mindestens eine weitere Dichtlippe (21, 23) aufweist und, dass die mindestens eine weitere Dichtlippe (21, 23) als seitliche Dichtlippe in einer Seitenfläche des Dichtrings (20) angeordnet ist und an seitlichen Nutflächen (1, 3) anliegt.

2. Dichtungsanordnung nach Anspruch 1 **dadurch gekennzeichnet, dass** die Kontaktspannung (32) im Bereich der ersten Dichtlippe (26) immer geringer ist als die Kontaktspannung (31, 33) im Bereich der mindestens einen weiteren Dichtlippe (21, 23).

3. Dichtungsanordnung nach einem der vorangehenden Ansprüche
**dadurch gekennzeichnet,**
**dass** am Dichtring (20) Einführschrägen (25) vorgesehen sind,
wobei die Einführschrägen nur am Übergang von Seitenflächen zur nutgrundseitigen Fläche angeordnet sind, oder
wobei sich die Einführschrägen über einen Großteil der Seitenflächen erstrecken oder,
wobei sich die Einführschrägen über die gesamten Seitenflächen erstrecken.

4. Dichtungsanordnung nach einem der vorangehenden Ansprüche **dadurch gekennzeichnet,**
**dass** die Nut (13) konisch ausgeführt ist und der Dichtring (20) einen konischen Querschnitt besitzt.

5. Dichtungsanordnung nach einem der Ansprüche 1 bis 3 **dadurch gekennzeichnet,**
**dass** die Nut (13) eine sich zum Nutgrund (2) hin verjüngende Nutbreite besitzt und der Dichtring (20) einen rechteckigen Querschnitt aufweist.

6. Dichtungsanordnung nach einem der vorangehenden Ansprüche **dadurch gekennzeichnet,**
**dass** der Dichtring (20) an seiner dem Nutgrund (2) zugerichteten Seite mindestens eine Erhebung (12) als Abstandshalter besitzt.

7. Dichtungsanordnung nach einem der vorangehenden Ansprüche **dadurch gekennzeichnet,**
**dass** die mindestens eine weitere Dichtlippe (21, 23) am spaltseitigen Ende der Seitenfläche des Dichtrings (20) angeordnet ist.

8. Dichtungsanordnung nach einem der vorangehenden Ansprüche **dadurch gekennzeichnet,**
**dass** der Dichtring (20) x-förmig ist.

9. Dichtungsanordnung nach einem der vorangehenden Ansprüche **dadurch gekennzeichnet,**
**dass** jeweils die seitlichen Nutflächen (1, 3) mit einem Hinterschnitt (7) und die Seitenflächen des Dichtrings (20) mit eine komplementären Erhebung ausgestattet sind zur Bildung je einer Haltenase.

10. Dichtungsanordnung nach einem der Ansprüche 1-8 **dadurch gekennzeichnet,**
**dass** der Bereich des Nutgrunds (2) der Nut (13) mit mindestens einem dünnen Durchlass (14) mit einem Druckraum verbunden ist.

11. Dichtungsanordnung nach einem der vorangehenden Ansprüche **dadurch gekennzeichnet,**
**dass** die Nut (13) im Gehäuse (5) angeordnet ist und die Dichtungsanordnung als Stangendichtung ausgebildet ist.

12. Dichtungsanordnung nach einem der Ansprüche 1 bis 9 **dadurch gekennzeichnet,**
**dass** die Nut (13) im Maschinenelement (4) angeordnet ist und die Dichtungsanordung als Kolbendichtung ausgeführt ist.

13. Verwendung einer Dichtungsanordnung (100) nach einem der vorangehenden Ansprüche in einem Aktuator, wobei bei Druckbeaufschlagung des Aktuators der Dichtring (20) tiefer in die Nut (13) eintaucht.
